(19) **Europäisches Patentamt / European Patent Office / Office européen des brevets**

(11) **EP 1 356 583 B1**

(12) # FASCICULE DE BREVET EUROPEEN

(45) Date de publication et mention
de la délivrance du brevet:
**13.10.2010 Bulletin 2010/41**

(21) Numéro de dépôt: **02701349.9**

(22) Date de dépôt: **30.01.2002**

(51) Int Cl.:
*H02P 8/14* *(2006.01)*　　　*H02P 8/38* *(2006.01)*

(86) Numéro de dépôt international:
**PCT/FR2002/000357**

(87) Numéro de publication internationale:
**WO 2002/061936 (08.08.2002 Gazette 2002/32)**

(54) **SYSTEME DE CONTROLE DE MOTEURS SANS BALAIS**

REGELUNGSSYSTEM FÜR BÜRSTENLOSE MOTOREN

BRUSHLESS MOTOR CONTROL SYSTEM

(84) Etats contractants désignés:
**AT BE CH CY DE DK ES FI FR GB GR IE IT LI LU
MC NL PT SE TR**

(30) Priorité: **31.01.2001 FR 0101332**

(43) Date de publication de la demande:
**29.10.2003 Bulletin 2003/44**

(73) Titulaire: **Midi Ingenierie
F-31328 Castanet Tolosan Cedex (FR)**

(72) Inventeur: **FERES, Jacques
F-31560 MONTGEARD (FR)**

(74) Mandataire: **David, Alain et al
Cabinet Beau de Loménie
158, rue de l'Université
75340 Paris Cedex 07 (FR)**

(56) Documents cités:
**US-A- 3 324 369　　US-A- 3 575 653
US-A- 3 766 458　　US-A- 4 320 330
US-A- 4 683 410　　US-A- 4 710 690
US-B1- 6 222 340**

EP 1 356 583 B1

## Description

Domaine de l'invention

La présente invention concerne le contrôle des moteurs sans balais (type "brushless"). L'invention concerne plus particulièrement un système qui permet la synchronisation automatique des moteurs pas à pas pour éviter le décrochage de ces derniers.

Art antérieur

Dans les moteurs de type sans balais, il existe notamment les moteurs pas à pas. Ces moteurs sont généralement utilisés en boucle ouverte, ce qui nécessite de faire travailler ces moteurs avec une grande réserve de couple pour pouvoir supporter notamment des variations de charge importantes sur l'axe du moteur.

Les documents US 4 683 410 et US 6 222 340 divulguent des systèmes de contröle pour moteurs pas à pas selon l'art antérieur.

Quelle que soit l'utilisation envisagée, la commande du moteur, en tension ou en courant, ne peut être ajustée de façon rapide et fiable que si la position mécanique du rotor entraîné coïncide avec le champ magnétique créé dans le moteur. Pour garantir ce principe sans système de contrôle particulier de l'alimentation des pôles du moteur en fonction de ces paramètres, il faut que le moteur fonctionne dans des conditions idéales, c'est-à-dire que le couple de charge mécanique appliqué au rotor soit inférieur au couple moteur disponible. Bien évidemment, de telles conditions ne sont pas toujours garanties et un contrôle précis de la commande du moteur est indispensable dans la plupart des applications industrielles des moteurs pas à pas.

Ainsi pour remédier à un inconvénient fondamental des moteurs sans balais ou de type pas à pas, à savoir le "décrochage" ou désynchronisation du rotor, il a été imaginé différentes solutions.

L'une d'entre elles consiste à utiliser un organe de recopie des mouvements du moteur qui permet de vérifier en fin de mouvement que celui-ci s'est bien passé. Si ce type de contrôle peut être satisfaisant pour certaines applications sécurisées notamment dans le domaine médical, il reste cependant une solution qui vérifie a posteriori la réalisation du mouvement, pouvant générer des retards dans la réponse du moteur à la commande appliquée sans garantir le non décrochage du moteur.

Une autre solution plus élaborée consiste à piloter le moteur par auto-commutation qui via un synchro-décomposeur ("syncroresolver") multipôle permet de connaître la position mécanique du rotor. Cependant, ce système présente l'inconvénient d'un surcoût important relatif à la mise en oeuvre d'un synchro-décomposeur et du traitement associé. Cette solution assez compliquée sur le plan de la réalisation augmente très sensiblement le coût d'utilisation d'un système de commande d'un moteur pas à pas car elle nécessite la mise en oeuvre d'un synchro-décomposeur et d'une électronique de traitement analogique et numérique complexe. Par ailleurs, la bande passante liée à ce traitement n'est en général pas très élevée, ce qui diminue, entre autre, la "raideur" apparente du moteur.

Objet et description succincte de l'invention

La présente invention vise à remédier aux inconvénients précités et à réaliser, de façon économique, un système de contrôle de moteur sans balais qui assure une synchronisation rapide et fiable entre la position mécanique du rotor et le champ magnétique créé.

Ces buts sont atteints grâce à un système de contrôle pour moteur sans balais comprenant un rotor et un stator ayant une pluralité d'enroulements de phase alimentées en courant suivant un cycle électrique prédéterminé pour faire avancer le rotor, le système comprenant un dispositif indicateur de la position mécanique du rotor disposé sur l'axe de ce dernier, un dispositif de détection optique ou autre pour détecter la position mécanique du rotor sur le dispositif indicateur et formant avec celui-ci un dispositif de codage incrémental de la position mécanique du rotor, et un ensemble de commande du moteur composé d'un moyen de traitement des signaux de codage de la position mécanique du rotor relié à un moyen de régulation de l'alimentation de la pluralité d'enroulements du stator, caractérisé en ce que le dispositif indicateur de la position mécanique du rotor comprend au moins une première série d'indications de la position mécanique du rotor correspondant au passage d'un cycle électrique du stator de sorte que le dispositif de codage incrémental délivre au moyen de traitement un signal de synchronisation pour tous les cycles électriques.

Ainsi, sur tout moteur sans balais, il peut être avantageusement monté un dispositif indicateur de position selon l'invention qui, associé à un moyen de traitement spécifiquement programmé ou câblé, permet d'avoir une synchronisation rapide et fiable entre le champ magnétique créé dans le moteur et la position mécanique du rotor. Ceci permet de réaliser un axe numérique pouvant fonctionner en vitesse contrôlée, en position ou en couple dans un ensemble complètement autonome et à faible coût.

Selon un mode de réalisation de l'invention, le moteur sans balais est un moteur de type pas à pas.

Selon un aspect de l'invention, le moyen de régulation délivre un signal au moyen de traitement qui correspond à la phase du courant injecté dans la pluralité d'enroulements du stator.

Selon un mode de réalisation de l'invention le dispositif indicateur comprend en outre une seconde série d'indications de la position mécanique du rotor dont le nombre est supérieur au nombre d'indications de la première série.

Plus particulièrement, le dispositif indicateur comprend un disque optique où chaque série d'indications est formée d'une pluralité de jeux de marques susceptibles d'être détectés par le dispositif de détection optique, ladite pluralité de marques étant disposée uniformément autour de l'axe du disque en une bande circulaire.

Selon un aspect particulier de l'invention, le disque comprend une première pluralité de 50 jeux de marques disposés selon une première bande circulaire et correspondant à 50 cycles électriques du moteur.

Selon un autre aspect particulier de l'invention, le disque comprend en outre une seconde pluralité de 500 jeux de marques uniformément disposés selon une seconde bande circulaire adjacente à la première bande.

Le système peut comprendre en outre un second moyen de traitement connecté audit premier moyen de traitement et comprenant des moyens pour générer des profils de vitesse du moteur et des moyens de liaison externe.

Plus spécifiquement, les moyens de traitement sont constitués d'un microprocesseur ou d'un circuit intégré dédié.

Selon une caractéristique particulière de l'invention, le premier moyen de traitement comprend des moyens pour mémoriser un décalage entre la position mécanique du dispositif indicateur et la position mécanique réelle du rotor. Le moyen de traitement synchronise alors chaque cycle électrique automatiquement sur la position mécanique du rotor en tenant compte de décalage mémorisé.

Selon un mode de réalisation particulier de l'invention, le premier moyen de traitement peut fonctionner soit en suivi de profile de vitesse, soit en suivi de la position mécanique du rotor pour éviter le décrochage, le basculement entre les deux modes étant réalisé automatiquement.

Brève description des dessins

D'autres caractéristiques et avantages de l'invention ressortiront de la description suivante de modes particuliers de réalisation de l'invention, donnés à titre d'exemples non limitatifs, en référence aux dessins annexés, sur lesquels:

- la figure 1 est une vue en coupe d'un moteur pas à pas de type hybride comprenant 200 pas,
- la figure 2 est un schéma simplifié du circuit d'un mode de réalisation de l'invention,
- la figure 3 est une vue simplifiée d'un disque optique selon un mode de réalisation de la présente invention,
- la figure 4 est une vue à plat d'une partie des bandes circulaires représentées en figure 3,
- la figure 5 est une vue montrant le dispositif de codage incrémental selon un mode de réalisation de la présente invention,
- la figure 6 est un schéma montrant les signaux générés par le dispositif de détection optique sur le disque optique, et
- la figure 7 est un diagramme illustrant les différents états du courant dans les enroulements du moteur pour un cycle électrique.

Description détaillée de modes particuliers de réalisation

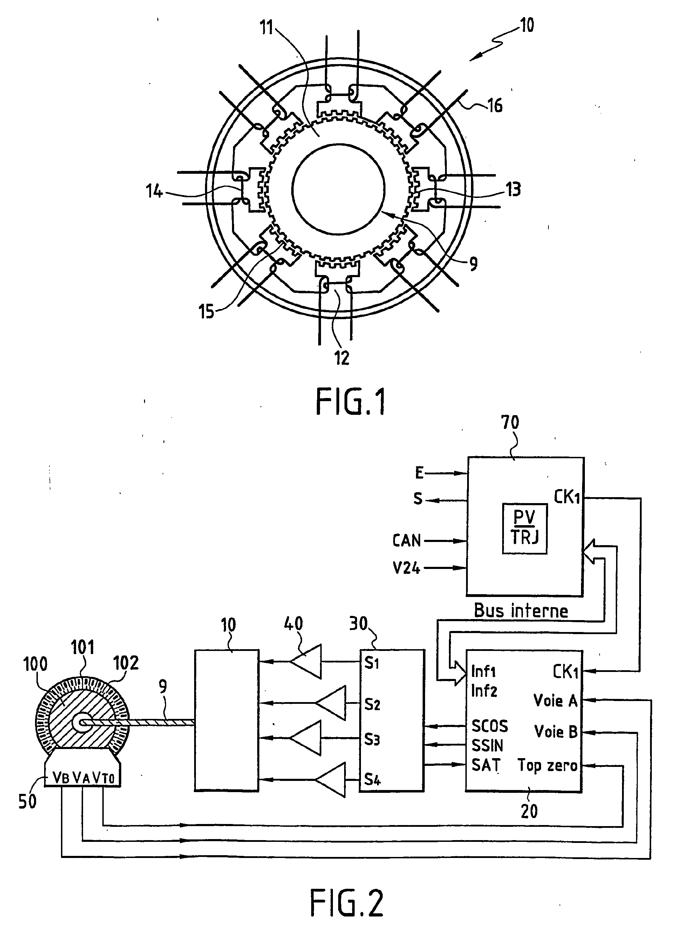

Le système objet de la présente invention va être décrit ci-après en relation avec un type de moteur sans balais très répandu, à savoir un moteur pas à pas de type hybride à 200 pas, tel que représenté sur la figure 1. Toutefois, tout autre type de moteur pas à pas ou de type sans balais ("moteur brushless") pourra être utilisé dans le système selon l'invention. Au vu de la description qui suit, l'homme du métier pourra envisager sans difficulté des variantes de réalisation comprenant des moteurs pas à pas ou bien des moteurs sans balais avec un type d'alimentation ou un nombre de pas différent.

Le moteur 10 comprend une partie stator 12 entourant une partie rotor 11. Le rotor 11 consiste en deux pièces circulaires comportant chacune 50 dents 13. Entre ces deux pièces se trouve un aimant permanent (non représenté), créant ainsi un pôle sud sur une pièce et un pôle nord sur l'autre. La partie visible du rotor 11 sur la figure 1 correspond à l'une de ces deux pièces. Les deux pièces ou disques polaires sont décalés d'un angle électrique de $\pi$; ainsi, avec 50 dents, le rotor est équivalent à 50 paires de pôles. D'autre part, le stator comprend 8 pôles 14, chacun possédant 5 dents 15, ce qui fait un total de 40 dents. Autour de chaque pôle 14 est enroulée une bobine 16. Par conséquent, si un courant circule dans une paire de bobines du stator, les pôles résultants vont attirer respectivement les dents de polarités inverses, à chaque extrémité du rotor. Le rotor peut prendre autant de positions qu'il a de positions d'alignement entre les dents du rotor et du stator ce qui correspond au nombre de pas par tour. Par conséquent, dans le cas présent, le moteur 10 présente 200 pas par tour.

Que le moteur fonctionne en mode unipolaire ou bipolaire, en biphasé (cas du moteur présenté), triphasé ou plus, en pas entier, demi pas ou micropas, sa rotation s'effectue toujours par une séquence de permutation circulaire des configurations d'alimentation dans un sens ou dans l'autre. Chaque séquence correspond à ce que l'on appelle un cycle électrique qui peut être représenté sur un cercle trigonométrique: en mode biphasé, les courants des deux phases sont représentés par les fonctions sinus et cosinus de l'angle électrique et leur période correspond au cycle électrique. Dans le mode de réalisation présentement décrit, un cycle électrique complet correspond à quatre pas moteur, par conséquent, il existe une relation entre l'angle mécanique et l'angle électrique et, plus précisément, comme le moteur comprend 200 pas par tour, un cycle électrique correspondant à un angle mécanique de $\frac{360}{200} \times 4 = 7.2°$ .

Pour entraîner le moteur de façon contrôlée soit en vitesse, en couple ou pour du positionnement, il est indispensable de commander les bobines des phases du stator en synchronisation avec la position mécanique du rotor.

Les systèmes utilisant des synchro-décomposeurs multipôles ou des codeurs de position absolue permettent de réaliser une commande du moteur en auto-commutation. Cependant, comme expliqué plus haut, ces systèmes sont relativement coûteux et ne disposent ni de bande passante suffisamment grande pour réaliser des asservissements de vitesse précis (notamment les vitesses élevées), ni d'une raideur suffisante pour réaliser des asservissements de position précis sans l'utilisation de réducteurs.

Comme les phases sont excitées suivant des cycles électriques (qui correspondent ici à quatre pas moteurs), pour maintenir un contrôle cohérent sur le moteur pendant une utilisation, il conviendrait d'être en mesure de garantir une synchronisation pour chaque cycle électrique. En effet, si un décrochage du rotor survient lors d'un processus de fonctionnement, la position mécanique de celui-ci n'est plus synchronisée avec le cycle électrique correspondant de sorte que le pilotage du moteur en temps réel à l'échelle du cycle électrique devient une nécessité.

Pour remédier à ce problème, la présente invention propose donc d'utiliser conjointement un dispositif programmable et un codeur incrémental spécifique qui permet de connaître la positon mécanique du rotor avec une définition nettement supérieure à celle du pas moteur.

Avec ce système, on est en mesure de pouvoir faire fonctionner tout moteur pas à pas en faisant appel à une auto-commutation synchronisée entre le champ magnétique créé électroniquement et la position instantanée du rotor.

La figure 2 montre un mode de réalisation du système selon l'invention. Le système est principalement composé d'un moteur pas à pas 10 ayant la configuration décrite ci-dessus, d'un disque 100 et d'un dispositif de détection optique 50 formant un codeur incrémental 150, d'un premier dispositif traitement 20 tel qu'un microcontrôleur, d'un régulateur de courant 30 et d'une série d'amplificateurs 40. Le disque optique 100 de conception spécifique à l'invention est fixé à l'axe 9 du rotor du moteur 10. Le disque optique 100 solidaire des mouvements du rotor présente le même déplacement angulaire que le rotor lorsqu'il est mis en rotation par excitation des bobines du stator.

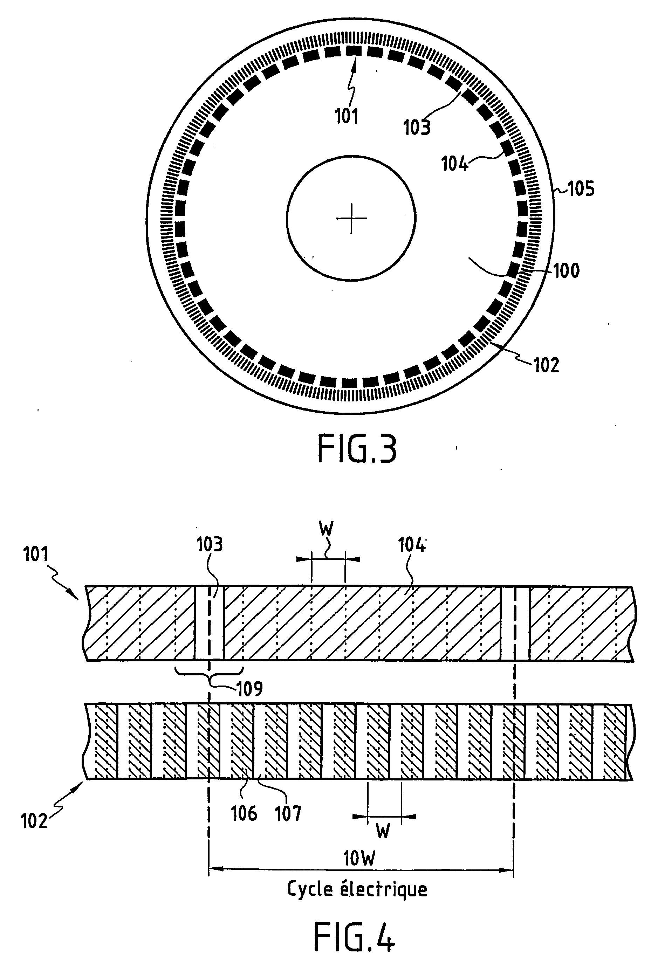

La structure du disque 100 spécialement conçue selon l'invention est représentée en figure 3. Le disque optique 100 est constitué d'un plateau circulaire 105 comprenant une première et une seconde bandes circulaires 101 et 102 disposées au voisinage de la périphérie du plateau 105. Chacune des bandes 101 et 102 comprend un motif composé d'une alternance de marques distinctives adaptée pour être lues par un dispositif de détection optique classique. La détection optique peut être mise en oeuvre de différentes façons, soit par transmission directe, soit par réflexion. Le signal électrique émis par le dispositif de détection peut être associé à la présence ou à l'absence de signaux optiques, ou à la combinaison des deux. Lorsque le dispositif de détection fonctionne par transmission directe, celui-ci comprend un ou plusieurs ensembles émetteur-récepteur optique disposés de chaque côté du disque. En réflexion, l'émetteur et le récepteur correspondant sont disposés du même côté du disque.

Pour une détection optique par transmission directe, le plateau 105 peut être constitué d'un disque transparent sur lequel des marques opaques modulent la transmission d'un faisceau optique. Alternativement, le plateau peut être un disque opaque dont les marques sont constituées par des ouvertures laissant passer le faisceau optique.

Pour une détection optique par réflexion, les marques disposées sur le disque peuvent être réfléchissantes et le disque opaque ou inversement. Dans les deux cas de détection, le plateau peut être réalisé par une technique de métallisation ou par photogravure.

D'autre part, le codeur incrémental ci-dessus décrit selon une technologie de détection optique pourrait être également de type magnétique (effet Hall ou autre).

Une première bande 102, ou jeu de marques, est destinée à réaliser un codeur incrémental classique pour donneur la position relative du rotor moteur avec la résolution désirée.

Lorsqu'un jeu de marques apparaît dans l'alignement des organes de détection d'une voie du dispositif 50, ce dernier émet un signal en synchronisation avec le passage de ces marques. Les organes de détection des deux voies « codeur incrémental » étant décalés d'un quart du pas des marques de la bande 102, les signaux générés lors du mouvement du disque sont en quadrature et le sens du déphasage dépend du sens de rotation du disque.

Le pas W des marques dépend de la résolution désirée. Dans le mode de réalisation présenté, la résolution retenue est de 10 micropas par pas, soit 2000 micropas par tour moteur, soit 500 marques 106.

Puisque le principe de décodage du codeur incrémental permet de gérer 4 transitions par marque, le pas des marques W est donc de 360°/500 = 0,72°.

Le motif réel des marques (largeur, hauteur, rayon optique,...) est adapté au modèle d'organe de détection 50 standard du commerce retenu.

Une deuxième bande 101, ou jeu de marqués, est destinée à permettre de « phaser » le cycle électrique du stator sur le mouvement réel du rotor. Cette bande 101 comprend donc un motif dont la périodicité correspond, dans le mode de réalisation présenté, à 4 pas par moteur, comme la période du cycle électrique.

Ainsi, comme le moteur comprend 200 pas par tour et qu'un cycle électrique en compte 4, le nombre de ces motifs 103 sur le disque est de 50, ils sont répartis régulièrement avec un pas de 7,2° tout autour du disque.

Tout comme pour la première bande décrite, le motif réel de cette bande 101 (ou jeu de marques) est adapté au modèle d'organe de détection 50 retenu et peut donc prendre différentes formes en fonction de ce dernier.

La figure 4 montre un exemple des positions respectives de motifs des bandes 101 et 102. La forme réelle des motifs utilisés dépend des caractéristiques de détection de l'organe de détection 50 utilisé.

Le fait de choisir une bande à 10 transitions par cycle électrique est une simple question de choix car 12, 16 ou 24 transitions conviendraient tout aussi bien. Le choix de 10 transitions par cycle permet de disposer d'un angle électrique suffisamment fin pour pouvoir optimiser l'angle de charge dans le moteur sans toutefois pénaliser l'électronique par une fréquence d'acquisition trop grande dans les vitesses élevées.

Le disque 100 ainsi conçu selon l'invention peut être utilisé avec les dispositifs de détection optique conventionnels tels que, par exemple, des fourches de codeurs optiques standards trois voies.

Ainsi, le disque optique 100 selon l'invention associé à un dispositif de détection optique 50 offre une solution économique de codeur incrémental à 3 voies qui permet de connaître la position mécanique du rotor à 1/10 de cycle électrique près avec une synchronisation possible tous les cycles électriques.

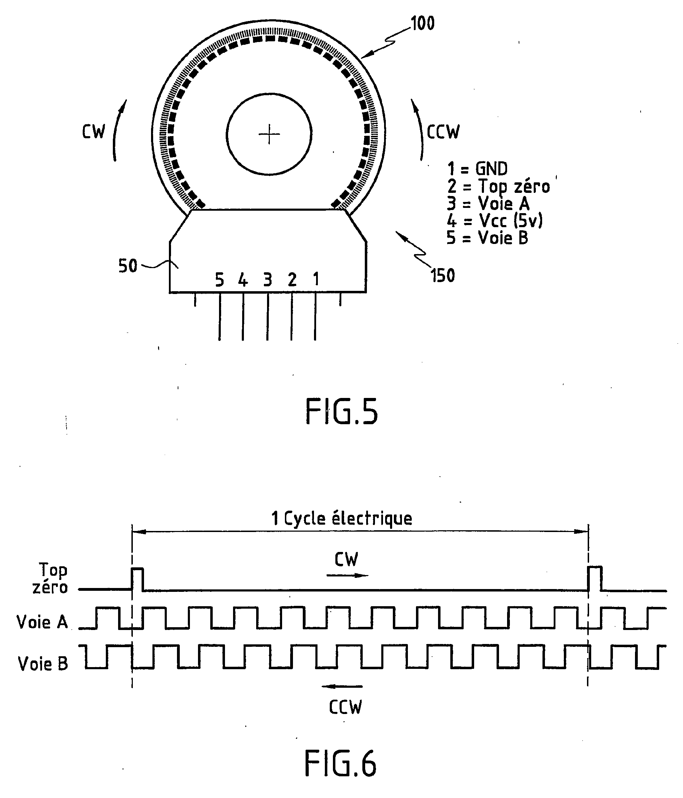

La figure 5 illustre le codeur incrémental 150 comprenant le dispositif de détection optique 50 qui comporte 5 broches de sortie. En référence avec la figure 6, la broche 2 émet, par lecture du motif de la bande 101, un signal "top zéro" qui correspond à un cycle électrique tandis que les broches 3 et 5 émettent respectivement, par lecture de la bande 102, deux signaux en quadrature appelés "voie A" et "voie B". Ces deux signaux permettent de connaître la position du rotor par comptage ou décomptage à partir d'une fonction décodeur classique programmée dans le microcontrôleur.

La valeur de la position mécanique est comparée avec la valeur de la position du champ magnétique directement lié aux courants des bobines moteur de façon à mesurer l'angle de charge. La position du champ magnétique est appelée position électrique. Contrairement au fonctionnement classique brushless ou autocommuté, cet angle n'est pas forcé à 90° (respectivement -90° en cas de freinage). Si cet angle dépasse +90°, respectivement -90°, alors la position électrique n'est plus incrémentée (respectivement décrémentée) par l'horloge de pas mais limitée par la position mécanique donnée par les impulsions du codeur. Cette solution assure que le rotor ne décroche plus car le champ magnétique du stator ne peut pas être trop en avance (respectivement en retard au freinage) vis-à-vis du rotor.

On revient maintenant à la figure 2 pour expliquer le fonctionnement du système conformément à l'invention.

Le microcontrôleur 20 qui pilote l'alimentation en courant des bobines du stator via le régulateur 30 reçoit en entrée les trois signaux "voie A", "Voie B" et "Top zéro" émis par le codeur 150 décrit plus haut. La forme de ces signaux est telle que représentée en figure 6 pour un cycle électrique. Le microcontrôleur 20, après traitement, envoie au régulateur 30 des informations pour l'alimentation en courant des bobines sous forme de deux signaux de commande en tension "SCOS" et "SSIN". Les signaux "SSIN" et "SCOS" représentent l'amplitude de courant désirée des deux phases moteur, elles sont d'allure sinusoïdale. L'argument du vecteur électrique résultant est égal à l'angle électrique défini plus haut et son déphasage par rapport à la position mécanique donnée par le codeur est contrôlé comme décrit plus haut.

Le régulateur 30 présenté sur la figure 2 est un régulateur à découpage associé à 4 étapes de puissance 40 pilotant le moteur en mode unipolaire.

Un régulateur linéaire ou un pilotage en mode bipolaire est tout à fait utilisable.

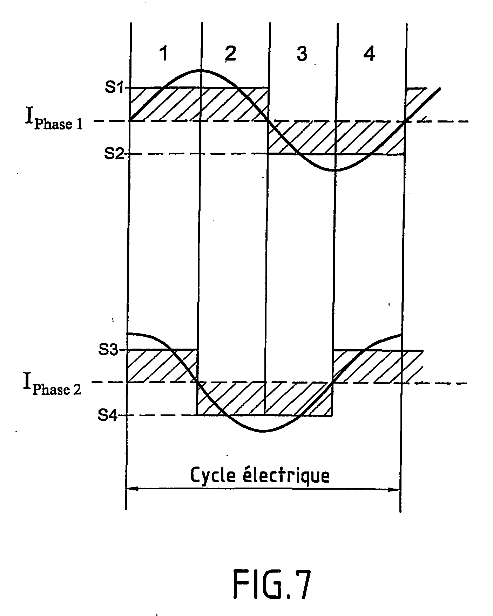

Les sorties $S_1$ et $S_2$ représentent l'amplitude du courant de la première phase, $S_1$ pour le sens positif, $S_2$ pour le sens négatif. Pour un régulateur à découpage, ces signaux sont de type PWM (modulation d'impulsions en largeur ou en durée). Pour un régulateur linéaire, ils sont analogiques. De la même façon, les signaux $S_3$ et $S_4$ sont associés à la deuxième phase du moteur. La figure 7 donne l'allure des signaux sur un cycle électrique en représentation analogique, hors saturation, ils sont d'allure identique au courant injecté dans les phases moteur.

Le courant est injecté dans les bobines en fonction de la position mécanique mesurée, ce qui offre la possibilité, avec le disque de l'invention, d'avoir une synchronisation tous les cycles électriques en quatre pas moteur au maximum et ceci sans avoir besoin de recourir à un codeur absolu ou à un synchro-décomposeur associé à un dispositif contrôle externe.

Le contrôle du moteur conformément à l'invention apporte de nombreux avantages dans l'utilisation pratique du moteur.

En effet, lors de la mise sous tension du moteur, le microcontrôleur peut initier un mouvement d'entraînement du rotor tout d'abord sans référence de synchronisation jusqu'à la détection d'un Top zéro. Dès la détection d'un Top, le microcontrôleur va synchroniser le début d'un cycle électrique sur la position mécanique du rotor. Par conséquent, avec ce système, la synchronisation se fait en quatre pas maximum à la mise sous tension du moteur. Ceci évite d'avoir à effectuer une initialisation particulière du rotor (vibrations, stabilisation de la vitesse...) à chaque mise sous tension et de garantir la synchronisation même en cas d'effort sur l'axe du moteur.

D'autre part, pour des raisons propres à la self induction du moteur, le courant dans les bobines ne s'établit pas immédiatement à chaque transition. En conséquence, le champ magnétique est retardé d'autant. Pour pouvoir corriger le retard, le régulateur 30 émet un signal "SAT" qui est une image du retard du courant injecté dans les bobines du stator et qui sert donc à mesurer le retard du champ magnétique.

Par conséquent, pour compenser ce retard, d'autant plus lorsqu'on monte en vitesse, le système réalise un correcteur d'avance du courant par comparaison entre le signal Top zéro du codeur et le signal SAT issu du régulateur; ceci permet de corriger automatiquement le déphasage électrique en appliquant une avance correspondante sur les signaux de commande SSIN et SCOS s'adaptant automatiquement au modèle de moteur et à la tension d'alimentation utilisée. Le microcontrôleur mesure le retard entre le courant injecté via le signal SAT et le signal Top zéro. De cette mesure, le circuit numérique en déduit la valeur qu'il faut donner aux signaux de commande SSIN et SCOS pour que les deux signaux SAT et Top zéro soient en coïncidence. Cette correction de phase est traitée par une boucle d'asservissement moins rapide que la boucle de contrôle de l'angle de charge proprement dite.

Un autre avantage du système selon l'invention est que le codeur incrémental 150 peut être monté sur l'axe du moteur sans précautions particulières. En effet, le microcontrôleur 20 sera utilisé pour effectuer, en usine, une mesure du déphasage entre le codeur optique et le champ magnétique du stator (identique à la position mécanique du rotor sur charge nulle) pour ensuite décaler le signal top zéro de cette valeur mesurée. Le décalage mesuré est alors gardé en mémoire dans le programme du microcontrôleur qui pourra traiter les signaux reçus du codeur avec la correction nécessaire. Cette méthode permet de réaliser une construction économique du codeur et de son assemblage sur le moteur, sans nécessiter de calage mécanique.

Les différentes étapes ci-dessus décrites sont mise en oeuvre par un code programmé et stocké dans le microcontrôleur. Toutefois, l'utilisation d'un microcontrôleur n'est pas impérative. Un circuit intégré dédiée à ces fonctions tel qu'un "ASIC" convient également. Dans ce cas, toutes les fonctions de traitement utiles à l'invention qui sont programmées et stockées dans le microcontrôleur seront mis en oeuvre dans un circuit intégré spécifiquement câblé pour réaliser ces fonctions.

D'autre part, un second moyen de traitement 70 peut être prévu dans le système selon la présente invention. Ce second moyen de traitement relié par bus au premier moyen de traitement 20 permet de générer par une programmation spécifique des profils de vitesse "PV" ou des trajectoires "TRJ" pour le moteur. Ce moyen de traitement comprend aussi des moyens de liaison série V24, CAN, ou autres et diverses entrées/sorties pour communiquer avec des dispositifs externes selon les besoins.

Ce second moyen de traitement, ainsi qu'éventuellement les moyens de régulation, peut être intégré dans le même microprocesseur ou circuit spécifique que le premier moyen de traitement 20.

Grâce au système de contrôle de la présente invention, la synchronisation peut être située n'importe où sur le cycle électrique. Il n'y a pas de nécessité d'effectuer de calage mécanique du dispositif indicateur 100 par rapport au rotor. Enfin, le retard d'établissement du courant dans les enroulements du stator à haute vitesse est compensé de manière auto-adaptative par un système d'avance de phase géré par le moyen de traitement 20.

## Revendications

1. Système de contrôle pour moteur sans balais (10) comprenant un rotor (11) et un stator (12) ayant une pluralité d'enroulements (16) de phase alimentés en courant suivant un cycle électrique prédéterminé pour faire avancer le rotor, ledit système comprenant:

   un dispositif indicateur (100) de la position mécanique du rotor disposé sur l'axe (9) de ce dernier,
   un dispositif de détection optique (50) pour mesurer la position mécanique du rotor sur le dispositif indicateur et formant avec celui-ci un dispositif de codage incrémental (150) de la position mécanique du rotor, et
   un ensemble de commande du moteur composé d'un moyen de traitement (20) des signaux de codage de la position mécanique du rotor relié à un moyen de régulation (30) de l'alimentation de la pluralité d'enroulements du stator,

   **caractérisé en ce que** le dispositif indicateur de la position mécanique du rotor comprend au moins une première série (101) d'indications de la position mécanique du rotor ayant une périodicité correspondant au même nombre de pas du moteur qu'une période du cycle électrique du stator et **en ce que** le dispositif de codage incrémental (150) délivre au moyen de traitement un signal de synchronisation, le moyen de traitement synchronisant le début d'un cycle électrique sur la position mécanique du rotor pour tous les cycles électriques.

2. Système selon la revendication 1, **caractérisé en ce que** le moteur sans balais (10) est un moteur de type pas à pas.

3. Système selon la revendication 1 ou 2, **caractérisé en ce que** le moyen de régulation (30) délivre un signal (SAT) au moyen de traitement (20), ledit signal correspondant au déphasage du courant injecté dans la pluralité d'enroulements du stator, de façon à corriger le retard entre le courant réel et sa consigne.

4. Système selon l'une quelconque revendication 1 à 3, **caractérisé en ce que** le dispositif indicateur (100) comprend en outre une seconde série (102) d'indications de la position mécanique du rotor dont le nombre est supérieur au nombre d'indications de la première série.

**5.** Système selon l'une quelconque des revendications 1 à 4, **caractérisé en ce que** le dispositif indicateur (100) comprend un disque (105) où chaque série d'indications est formée d'une pluralité de jeux de marques susceptibles d'être détectées par le dispositif de détection optique (50), ladite pluralité de marques étant disposée uniformément autour de l'axe du disque (105) en une bande circulaire (101; 102).

**6.** Système selon la revendication 5, **caractérisé en ce que** le disque (105) comprend une première pluralité de 50 jeux de marques (103, 104) disposés selon une première bande circulaire (101) et correspondant à 50 cycles électriques du moteur.

**7.** Système selon la revendication 6, **caractérisé en que** le disque (105) comprend en outre une seconde pluralité de 500 jeux de marques (106, 107) uniformément disposés selon une seconde bande circulaire (102) adjacente à la première bande.

**8.** Système selon l'une quelconque des revendications 1 à 7, **caractérisé en ce qu'**il comprend en outre un second moyen de traitement (70) connecté audit premier moyen de traitement et comprenant des moyens pour générer des profils de vitesse du moteur et des moyens de liaison externe.

**9.** Système selon l'une quelconque des revendications 1 à 8, **caractérisé en ce que** le ou les moyens de traitement (20; 70) sont constitués d'un microprocesseur.

**10.** Système selon l'une quelconque des revendications 1 à 8, **caractérisé en ce que** le ou les moyens de traitement (20; 70) sont constitués d'un circuit intégré dédié.

**11.** Système selon l'une quelconque des revendications 1 à 10, **caractérisé en ce que** le premier moyen de traitement (20) comprend des moyens pour mémoriser un décalage entre la position du dispositif indicateur et la position mécanique du rotor.

**12.** Système selon la revendication 11, **caractérisé en ce que** le moyen de traitement (20) synchronise chaque cycle électrique automatiquement sur la position mécanique du rotor en tenant compte du décalage mémorisé.

**13.** Système selon l'une quelconque des revendications 1 à 12, **caractérisé en ce que** le moyen de traitement (20) fonctionne soit en suivi de profil de vitesse, soit en suivi de la position mécanique du rotor pour éviter le décrochage, le basculement entre les deux modes étant réalisé automatiquement.

**Claims**

**1.** A control system for a brushless motor (10) comprising a rotor (11) and a stator (12) having a plurality of phase windings (16) powered electrically in a predetermined electrical cycle to cause the rotor to advance, said system comprising:

an indicator device (100) for indicating the mechanical position of the rotor and placed on the shaft (9) thereof;
an optical detector device (50) for measuring the mechanical position of the rotor from the indicator device, and co-operating therewith to form an incremental coder device (150) for the mechanical position of the rotor; and
a motor control assembly comprising processor means (20) for processing signals encoding the mechanical position of the rotor connected to regulator means (30) for regulating the power supply to the plurality of stator windings;
the system being **characterized in that** the indicator device for indicating the mechanical position of the rotor comprises at least a first series (101) of indications of the mechanical position of the rotor having a periodicity corresponding to the same number of motor steps as one period of the electrical cycle of the stator, and **in that** the incremental coder device (150) delivers a synchronizing signal to the processor means, the processing means synchronizing the start of an electrical cycle on the mechanical position of the rotor for all electrical cycles.

**2.** A system according to claim 1, **characterized in that** the brushless motor (10) is a stepper type motor.

**3.** A system according to claim 1 or claim 2, **characterized in that** the regulator means (30) delivers a signal (SAT) to the processor means (20), said signal corresponding to the phase offset of the current injected into the plurality of stator windings, thereby enabling the delay between the real current and the reference therefor to be corrected.

**4.** A system according to any one of claims 1 to 3, **characterized in that** the indicator device (100) further comprises a second series (102) of indications of the mechanical position of the rotor, of number greater than the number of indications in the first series.

**5.** A system according to any one of claims 1 to 4, **char-**

acterized in that the indicator device (100) comprises a disk (105) in which each series of indications is formed by a plurality of steps of marks suitable for being detected by the optical detector device (50), said plurality of marks being disposed uniformly in a circular band (101; 102) around the shaft of the disk (105).

6. A system according to claim 5, **characterized in that** the disk (105) comprises a first plurality of fifty sets of marks (103, 104) disposed in a first circular band (101) and corresponding to fifty electrical cycles of the motor.

7. A system according to claim 6, **characterized in that** the disk (105) further comprises a second plurality of 500 sets of marks (106, 107) uniformly disposed in a second circular band (102) adjacent to the first band.

8. A system according to any one of clams 1 to 7, **characterized in that** it further comprises second processor means (70) connected to said first processor means and including means for generating motor speed profiles and external connection means.

9. A system according to any one of claims 1 to 8, **characterized in that** the or each processor means (20; 70) are constituted by a microprocessor.

10. A system according to any one of claims 1 to 8, **characterized in that** the or each processor means (20; 70) are constituted by a dedicated integrated circuit.

11. A system according to any one of claims 1 to 10, **characterized in that** the first processor means (20) includes means or storing an offset between the position of the indicator device and the mechanical position of the rotor.

12. A system according to claim 11, **characterized in that** the processor means (20) synchronizes each electrical cycle automatically on the mechanical position of the rotor while taking account of the stored offset.

13. A system according to any one of claims 1 to 12, **characterized in that** the processor means (20) operates either by tracking speed profile, or by tracking the mechanical position of the rotor in order to avoid loss of synchronization, with switchover between the two modes being implemented automatically.

**Patentansprüche**

1. Kontrollsystem für einen bürstenlosen Motor (10) mit einem Rotor (11) und einem Stator (12), der eine Vielzahl von Phasenwicklungen (16) aufweist, die in einem vorbestimmten elektrischen Zyklus mit Strom versorgt werden, um den Rotor vorwärtszubewegen, wobei das System umfaßt:

eine Vorrichtung (100) zum Anzeigen der mechanischen Position des Rotors, die an dessen Achse (9) angeordnet ist,
eine optische Erfassungsvorrichtung (50), die zum Bestimmen der mechanischen Position des Rotors an der Anzeigevorrichtung dient und mit dieser einen Inkrementalgeber (150) für die mechanische Position des Rotors bildet, und
eine Anordnung zum Steuern des Motors, die von einem Mittel zur Verarbeitung (20) der Codiersignale der mechanischen Position des Rotors gebildet ist, das mit einem Mittel zum Regeln (30) der Versorgung der Vielzahl von Wicklungen des Stators verbunden ist,

**dadurch gekennzeichnet, daß** die Vorrichtung zum Anzeigen der mechanischen Position des Rotors wenigstens eine erste Reihe (101) von Markierungen der mechanischen Position des Rotors umfaßt, die eine Periodizität aufweisen, welche der gleichen Schrittanzahl des Motors wie eine Periode des elektrischen Zyklus des Stators entspricht, und daß der Inkrementalgeber (150) dem Verarbeitungsmittel ein Synchronisationssignal liefert, wobei das Verarbeitungsmittel den Beginn eines elektrischen Zyklus für alle elektrischen Zyklen mit der mechanischen Position des Rotors synchronisiert.

2. System nach Anspruch 1, **dadurch gekennzeichnet, daß** der bürstenlose Motor (10) ein Motor vom Typ Schrittschaltmotor ist.

3. System nach Anspruch 1 oder 2, **dadurch gekennzeichnet, daß** das Regelmittel (30) dem Verarbeitungsmittel (20) ein Signal (SAT) liefert, wobei das Signal der Phasenverschiebung des in die Vielzahl von Wicklungen des Stators eingespeisten Stroms entspricht, so daß die Verzögerung zwischen dem Ist-Strom und seinem Sollwert korrigiert wird.

4. System nach einem der Ansprüche 1 bis 3, **dadurch gekennzeichnet, daß** die Anzeigevorrichtung (100) ferner eine zweite Reihe (102) von Markierungen der mechanischen Position des Rotors umfaßt, deren Anzahl größer als die Anzahl von Markierungen der ersten Reihe ist.

5. System nach einem der Ansprüche 1 bis 4, **dadurch gekennzeichnet, daß** die Anzeigevorrichtung (100) eine Scheibe (105) umfaßt, auf der jede Markierungsreihe von einer Vielzahl von Markierungsgruppen gebildet ist, die geeignet sind, durch die optische Erfassungsvorrichtung (50) erfaßt zu werden, wobei die Vielzahl von Markierungen gleichmäßig um die Achse der Scheibe (105) in einem kreisförmigen Streifen (101; 102) angeordnet ist.

6. System nach Anspruch 5, **dadurch gekennzeichnet, daß** die Scheibe (105) eine erste Vielzahl von 50 Markierungsgruppen (103, 104) umfaßt, die entlang einem ersten kreisförmigen Streifen (101) angeordnet sind und 50 elektrischen Zyklen des Motors entsprechen.

7. System nach Anspruch 6, **dadurch gekennzeichnet, daß** die Scheibe (105) ferner eine zweite Vielzahl von 500 Markierungsgruppen (106, 107) umfaßt, die gleichmäßig entlang einem dem ersten Streifen benachbarten zweiten kreisförmigen Streifen (102) angeordnet sind.

8. System nach einem der Ansprüche 1 bis 7, **dadurch gekennzeichnet, daß** es ferner ein zweites Verarbeitungsmittel (70) aufweist, das mit dem ersten Verarbeitungsmittel verbunden ist und Mittel zum Generieren von Geschwindigkeitsprofilen des Motors sowie Außenverbindungsmittel umfaßt.

9. System nach einem der Ansprüche 1 bis 8, **dadurch gekennzeichnet, daß** das oder die Verarbeitungsmittel (20; 70) von einem Mikroprozessor gebildet sind.

10. System nach einem der Ansprüche 1 bis 8, **dadurch gekennzeichnet, daß** das oder die Verarbeitungsmittel (20; 70) von einer dedizierten integrierten Schaltung gebildet sind.

11. System nach einem der Ansprüche 1 bis 10, **dadurch gekennzeichnet, daß** das erste Verarbeitungsmittel (20) Mittel zum Speichern einer Verschiebung zwischen der Position der Anzeigevorrichtung und der mechanischen Position des Rotors umfaßt.

12. System nach Anspruch 11, **dadurch gekennzeichnet, daß** das Verarbeitungsmittel (20) jeden elektrischen Zyklus unter Berücksichtigung der gespeicherten Verschiebung automatisch mit der mechanischen Position des Rotors synchronisiert.

13. System nach einem der Ansprüche 1 bis 12, **dadurch gekennzeichnet, daß** das Verarbeitungsmittel (20) entweder im Modus Überwachung des Geschwindigkeitsprofils oder im Modus Überwachung der mechanischen Position des Rotors arbeitet, um das Außertrittfallen zu vermeiden, wobei das Umschalten zwischen den beiden Modi automatisch erfolgt.

FIG.1

FIG.2

FIG.3

W

10W

Cycle électrique

FIG.4

1 = GND
2 = Top zéro
3 = Voie A
4 = Vcc (5v)
5 = Voie B

FIG.5

FIG.6

FIG.7

**EP 1 356 583 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4683410 A
- US 6222340 B